# EUROPÄISCHE PATENTSCHRIFT

(11) **EP 2 736 663 B1**
(45) Veröffentlichungstag und Bekanntmachung des Hinweises auf die Patenterteilung: **16.03.2016**
(21) Anmeldenummer: 12740575.1
(22) Anmeldetag: 25.07.2012
(51) Int. Cl.: B22D 11/124, B05B 7/04, G05D 11/00

(54) **VORRICHTUNG ZUR KÜHLMITTELBEDÜSUNG IN EINER HÜTTENTECHNISCHEN ANLAGE**
DEVICE FOR SPRAYING COOLANT IN A METALLURGICAL PLANT
DISPOSITIF DE PULVÉRISATION DE RÉFRIGÉRANT DANS UNE INSTALLATION DE TECHNIQUE SIDÉRURGIQUE

(30) Priorität: 29.07.2011 DE 102011080127
(43) Veröffentlichungstag der Anmeldung: 04.06.2014
(73) Patentinhaber: SMS group GmbH, 40237 Düsseldorf (DE)
(72) Erfinder: WEYER, Axel, 42349 Wuppertal (DE); GÄRTNER, Horst, 41273 Niederkrüchten/Elmpt (DE); STAVENOW, Axel, 40625 Düsseldorf (DE); FRICK, Jürgen, 71384 Weinstadt (DE); HAAP, Roman, 71111 Waldenbuch (DE)
(74) Vertreter: Klüppel, Walter
(86) Internationale Anmeldenummer: PCT/EP2012/064554
(87) Internationale Veröffentlichungsnummer: WO 2013/017488

(56) Entgegenhaltungen:
- EP-A1- 1 356 868
- DE-A1- 19 604 902

## Beschreibung

Die Erfindung betrifft eine Vorrichtung zur Kühlmittelbedüsung einer hüttentechnischen Anlage nach dem Oberbegriff des Anspruchs 1 sowie ein Verfahren zur Kühlmittelbedüsung einer hüttentechnischen Anlage.

Insbesondere betrifft die Erfindung Einrichtungen und zugehörige Anlagenteile zur offenen Maschinenkühlung in hüttentechnischen Anlagen wie Stahlwerke und Stranggießanlagen mit Zweistoff-Sprühdüsen (Wasser/Luft Gemische).

### Stand der Technik:

Eine Brammen- oder Dünnbrammenstranggießanlage (nachfolgend Brammenanlage genannt) besteht aus einer Reihe von Segmenten, deren Anzahl von den jeweiligen Produktanforderungen bestimmt wird. Sie kann aus bis zu 20 Segmenten (mit entsprechender Rollbahn) bestehen. In einem Segment einer Brammenanlage sind zwischen 2-10 Rollen, bzw. Teilrollen (Rollen mit entsprechender Teilung) je Segmentrahmen (Ober- und Unterseite) vorhanden.

Aus der EP 1 752 238 A2 ist eine derartige Brammen- oder Dünnbrammenstranggießanlage bekannt.

Zwischen jedem Segment und jeder Rolle, also in jedem Zwischenraum, werden zur Kühlung des Stahls ein- und/oder Zweistoffdüsen mit einem Gemisch aus komprimierter Luft und Wasser betrieben. Bekannte Zweistoffdüsen sind zwischen einem Mischkörper und einem Mundstück mit einer Rohrleitung versehen, die je nach Anforderungen unterschiedlich lang sein kann, bis zu dem Aufbau, dass Mischkörper und Mundstück unmittelbar aneinander angrenzen und eine Einheit darstellen. Ein Vorteil von Zweistoffdüsen gegenüber Einstoffdüsen ist ein größerer Regelbereich. So kann bei Zweistoffdüsen ein in ausreichender Qualität zerstäubter Kühlmittelstrom typisch in einem Bereich von 1:10 (minimaler Volumenstrom zu maximaler Volumenstromstrom) erzielt werden. Insbesondere moderne Stranggießanlagen stellen Anforderungen an den Regelbereich der Zerstäuberdüsen, die durch bekannte Düsen noch nicht hinreichend abgedeckt werden.

Solche bekannten Düsen werden in der DE 196 04 902 und der EP 1 356 868 A1 beschrieben.

Es ist die Aufgabe der Erfindung, eine Vorrichtung zur Kühlmittelbedüsung anzugeben, die einen besonders großen Regelbereich ermöglicht.

Diese Aufgabe wird für eine eingangs genannte Vorrichtung erfindungsgemäß mit den kennzeichnenden Merkmalen des Anspruchs 1 gelöst.

Durch die Möglichkeit der vom Betriebsmodus abhängigen Zuströmung des einen Stoffes durch zwei separate Düsen werden insbesondere strömungsmechanisch bedingte Limitierungen überwunden, so dass Zugriff auf einen erweiterten Regelbereich besteht.

Die Düsen können dabei unterschiedlich ausgelegt sein, zum Beispiel mit verschiedenem Durchmesser. Insbesondere kann in der einen Betriebsart nur die erste, zum Beispiel kleinere Düse beströmt werden und in der anderen Betriebsart nur die andere, zum Beispiel größere Düse. Alternativ hierzu können aber auch beide Düsen gleich groß ausgestaltet werden; Beispielhaft könnte dann in der einen Betriebsart nur eine Düse und in der anderen Betriebsart beide Düsen durchströmt werden.

Unter einem ersten Stoff und einem zweiten Stoff im Sinne der Erfindung kann jedes Übliche Kühlmittel verstanden werden. Insbesondere können einer der beiden Stoffe Luft und der andere der beiden Stoffe Wasser sein. Bevorzugt, aber nicht notwendig sind dabei der erste Stoff Wasser und der zweite Stoff Luft.

Bei einer bevorzugten Weiterbildung der Erfindung ist es vorgesehen, dass das Regelglied über einen Betriebsparameter, bevorzugt einen Druck, des zweiten Stoffes ansteuerbar ist. Hierdurch wird einer gegenseitigen Abhängigkeit der beiden Stoffströme auf einfache Weise Rechnung getragen. In bevorzugter Weiterbildung kann dabei das Regelglied einen Ventilschieber umfassen, der durch den Betriebsparameter des zweiten Stoffes mechanisch ansteuerbar ist. Hierdurch kann eine einfache und sichere Regelung ermöglicht werden.

Zur bevorzugten baulichen Realisierung einer solchen mechanischen Ansteuerung kann der Ventilschieber einen bevorzugt, aber nicht notwendig federbelasteten Kolben umfassen, der mit einem Druck des zweiten Stoffes beaufschlagt ist. Grundsätzlich können aber auch andere mechanische Lösungen vorgesehen sein, zum Beispiel mittels druckbeaufschlagten Drehschiebern, Membranen oder Ähnliches. Insbesondere ist nicht notwendig ein statischer Stoffdruck zur Ansteuerung des Regelglieds erforderlich. Es kann auch ein dynamischer Druck, Saugdruck etc. des einen Stoffes verwendet werden, um eine mechanische Ansteuerung des Regelglieds zu erzielen.

Bei einer bevorzugten Ausführungsform der Erfindung ist es vorgesehen, dass der Ventilschieber in dem ersten Betriebsmodus einen ersten Durchlass zumindest teilweise freigibt und in dem zweiten Betriebsmodus einen zweiten Durchlass zumindest teilweise freigibt. Hierdurch werden zwei Durchlässe und insbesondere die zwei separaten Düsen durch denselben Ventilschieber angesteuert, was eine besonders einfache mechanische Lösung darstellt.

Ganz allgemein vorteilhaft hat das Regelglied keine elektrische Versorgung. Hierdurch wird nicht nur der Aufwand an Leitung und Ansteuerungen verringert, sondern der Einsatz des Regelglieds in thermisch hochbelasteten Teilen der Anlage wird ermöglicht. Zum Beispiel kann das Regelglied zusammen mit dem Mischbereich und dem Austritt am Ende von langen Zuleitung der Stoffe und in unmittelbarer Nähe des zu kühlenden Objektes angeordnet werden. Unabhängig vom Bestehen einer elektrischen Versorgung handelt es sich ganz allgemein bevorzugt dabei um den Einsatz in im Bereich der Kühlstrecke einer Stranggießanlage.

In besonders bevorzugter Ausführungsform der Erfindung sind das Regelglied, die Düsenglieder und der Mischbereich als Integrierte bauliche Einheit ausgebildet. Hierdurch lässt sich eine erfindungsgemäße Vorrichtung kompakt, kostengünstig und gegen die Umgebungsbedingungen unempfindlich ausbilden.

Die Aufgabe der Erfindung wird zudem durch ein Verfahren zur Kühlmittelbedüsung einer hüttentechnischen Anlage mit den Merkmalen des Anspruchs 8 gelöst. Besonders vorteilhaft, aber nicht notwendig kann eine erfindungsgemäße Vorrichtung zur Durchführung eines solches Verfahrens verwendet werden.

Weitere Hauptziele und Vorteile der Erfindung und Ihrer Detallgestaltungen sind:
- Die Erweiterung des Regelbereiches von Zweistoffdüsen über den bekannten Rahmen hinaus, um eine noch flexiblere Betriebsweise der Anlage im Bezug auf den Produktmix der Stahlqualitäten zu ermöglichen.
- Die Erweiterung des Regelbereiches kann sich sowohl auf den Wasservolumenstrom, als auch auf den HTC-Regelbereich (HTC = Heat Transmission Coefficient, erzielte thermische Kühlleistung) bei unverändertem Wasservolumenstrom, oder auf eine Kombination beider Parameter beziehen.
- Eine Reduzierung der Anzahl der unterschiedlichen Düsentypen in der Anlage kann dadurch erreicht werden. Dies hat Vorteile in Bezug auf die Verkürzung der Durchlaufzeiten während der Projektierung (Prozesstechnik, Konstruktion, Einkauf) und die vereinfachte Lagerhaltung von Ersatzteilen beim Betreiber.
- Verstelleinheit für eine Zweistoffdüse mit einem Gehäuse, einem Verstellkolben mit dem mindestens zwei Kobenpositionen angefahren werden können.
- Der Verstellkolben ist axial verschiebbar angeordnet und kann mindestens von einer Seite durch eines der beiden Zerstäubermedien (Druckluft oder Wasser) angesteuert werden.
- Der Verstellkolben ist axial verschiebbar angeordnet und kann mindestens von einer Seite durch ein separates Steuermedium (Druckluft oder Wasser) angesteuert werden.
- Wenigstens ein Verstellkolben ist dadurch gekennzeichnet, dass er vorgespannt und durch Federkraft zurückgestellt wird (einfachwirkend).
- Wenigstens ein Verstellkolben Ist dadurch gekennzeichnet, dass er vorgespannt und durch ein separates Steuermedium zurückgestellt wird (zweifachwirkend).
- Die Verstelleinheit ist dadurch gekennzeichnet, dass der Verstellkolben bei einem definierten Luftdruck (pLuft 1) eine vordefinierte Position einnimmt, bei der mindestens ein Wasserdurchgang in die Mischkammer freigegeben wird.
- Die Verstelleinheit ist dadurch gekennzeichnet, dass der Verstellkolben bei einem definierten, höheren oder geringeren Luftdruck (pLuft 2) eine vordefinierte Position einnimmt, bei der mindestens ein zweiter Wasserdurchgang in die Mischkammer freigegeben wird.
- Die Verstelleinheit ist dadurch gekennzeichnet, dass der Verstellkolben bei einem definierten Wasserdruck (pWasser 1) eine vordefinierte Position einnimmt, bei der mindestens ein Luftdurchgang in die Mischkammer freigegeben wird.
- Die Verstelleinheit ist dadurch gekennzeichnet, dass der Verstellkolben bei einem definierten höheren oder geringerem Wasserdruck (pWasser 2) eine vordefinierte Position einnimmt, bei der mindestens ein zweiter Luftdurchgang in die Mischkammer freigegeben wird.
- Die Verstelleinheit ist dadurch gekennzeichnet, dass der Verstellkolben in Abhängigkeit vom beaufschlagenden Luftdruck (steuerndes Zerstäubungsmedium) stufenlos den Querschnitt mindestens eines Wasserdurchgangs zur Mischkammer mehr oder weniger freigibt.
- Die Verstelleinheit ist dadurch gekennzeichnet, dass der Verstellkolben In Abhängigkeit vom beaufschlagenden Wasserdruck (steuerndes Zerstäubungsmedium) stufenlos den Querschnitt mindestens eines Luftdurchganges zur Mischkammer mehr oder weniger freigibt.
- Die Verstelleinheit ist dadurch gekennzeichnet, dass der Verstellkolben in Abhängigkeit vom beaufschlagenden Druck eines zusätzlichen, steuernden Mediums stufenlos den Querschnitt mindestens eines Wasserdurchganges zur Mischkammer mehr oder weniger freigibt.
- Die Verstelleinheit ist dadurch gekennzeichnet, dass der Verstellkolben in Abhängigkeit vom beaufschlagenden Druck eines zusätzlichen, steuernden Mediums stufenlos den Querschnitt mindestens eines Luftdurchganges zur Mischkammer mehr oder weniger freigibt.

Weitere Vorteile und Merkmale der Erfindung ergeben sich aus dem nachfolgend beschriebenen Ausführungsbeispiel sowie aus den abhängigen Ansprüchen.

Nachfolgend wird ein bevorzugtes Ausführungsbeispiel der Erfindung beschrieben und anhand der anliegenden Zeichnungen näher erläutert.
- Fig. 1: zeigt eine räumliche Ansicht einer erfindungsgemäßen Vorrichtung
- Fig. 2: zeigt eine Schnittansicht durch die Vorrichtung aus Fig. 1 in einem ersten Betriebsmodus.
- Fig. 3: zeigt die Schnittansicht aus Fig. 1 in einem zweiten Betriebsmodus.

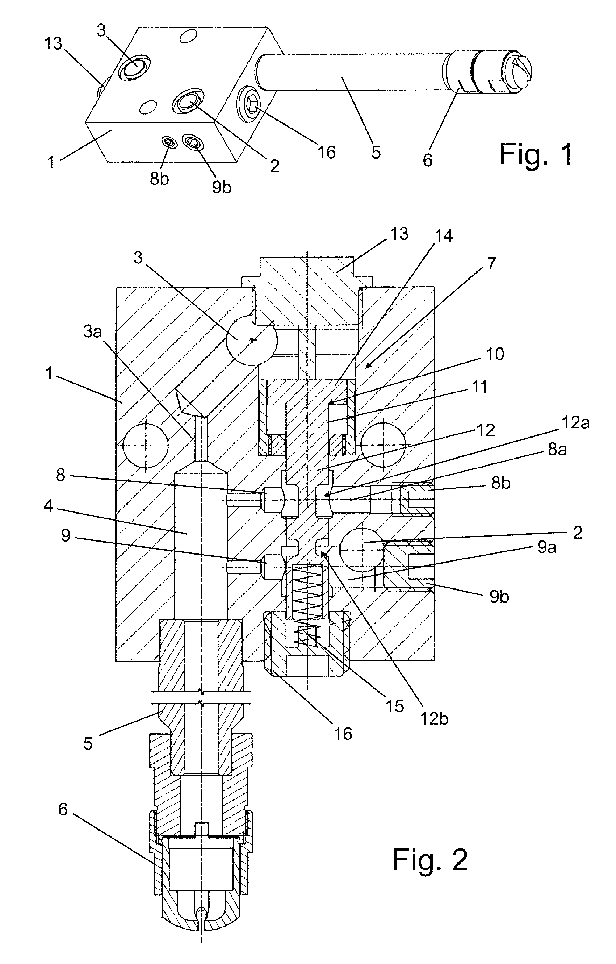

Die erfindungsgemäße Vorrichtung zur Kühlmittelbedüsung nach Fig. 1 ist als integrierte bauliche Einheit ausgebildet. Sie umfasst ein Gehäuse 1, das vorliegend als einstückiges Bauteil ausgeformt ist, zum Beispiel als Umformteil aus einem Metallblock.

In das Gehäuse 1 münden eine erste Zuleitung 2 zur Zuführung von Wasser als einem ersten Stoff und eine zweite Zuleitung 3 zur Zuführung von Luft bzw. Druckluft als einem zweiten Stoff. In dem Gehäuse 1 ist eine Mischkammer 4 angeordnet, in der die beiden Stoffe Wasser und Luft zur Durchmischung kommen.

An dem Gehäuse 1 ist ein rohrförmiges Zwischenstück 5 angeordnet, das eine Verbindungsleitung zwischen der Mischkammer 4 und einem Austritt 6 des in der Mischkammer 4 gebildeten Kühlmittelgemisches ausbildet. Der Austritt 6 hat die Form eines Mundstücks zur gezielten Freigabe des in der Mischkammer 4 gebildeten Gemisches in einen Sprühkegel.

Weiterhin ist In dem Gehäuse 1 ein Regelglied 7 angeordnet, mittels dessen die Strömung des ersten Stoffes in der Vorrichtung geregelt werden kann. Dabei kann der erste Stoff in Abhängigkeit von dem Druck des zweiten Stoffes zum einen durch ein erstes Düsenglied 8 strömen und zum anderen durch ein zweites Düsenglied 9.

Die Düsenglieder 8, 9 sind jeweils am Ende von Durchlässen in Form von Bohrungen 8a, 9a eingesetzt, die Jeweils in den Mischbereich bzw. die Mischkammer 4 münden. Die Bohrungen 8a, 9a sind an einem jeweiligen Gehäuseaustritt mit Schraubstopfen 8b, 9b dicht verschlossen.

Das Regelglied 7 umfasst vorliegend einen Ventilschieber 10 mit einem Kolben 11 und einem Schieberabschnitt 12. Der Kolben 11 ist in einem in dem Gehäuse 1 ausgeformten und mit einem Stopfen 13 verschlossenen Zylinder 14 linear verschieblich geführt. Der an den Kolben 11 anschließende Schieberabschnitt 12 hat eine zylindrische Form mit einer ersten Ausnehmung 12a und einer zweiten, versetzten Ausnehmung 12b. Der Ventilschieber 10 ist in einer Richtung mit einer Federkraft vorbelastet. Dies ist vorliegend dadurch realisiert, dass ein dem Kolben 11 entgegengesetztes Ende des Schieberabschnitts 12 gegen eine Feder 15 abgestützt ist, welche wiederum gegen einen gehäusefesten Stopfen 16 abgestützt ist.

Der Schieberabschnitt Ist linear verschieblich in einer zylindrischen Bohrung geführt, die die Bohrungen 8a, 9a senkrecht kreuzt.

Je nach Stellung des Ventilschiebers 10 kann dabei eine jede der Bohrungen 8a, 9a bezüglich eines Durchtritts des ersten Stoffes entweder geschlossen sein, indem sie von dem Schieberabschnitt 12 überdeckt ist, oder geöffnet sein, indem sie von einer der Ausnehmungen 12a, 12b des Schieberabschnitts 12 überdeckt wird.

Die zweite Zuleitung 3 der Druckluft ist zum einen mit dem Zylinder 14 oberhalb des Kolbens 11 verbunden und zum anderen mit der Mischkammer 4. Dabei weist die Verbindung zur Mischkammer 4 eine Querschnittsverengung 3a auf, so dass an dem Kolben 11 auch bei strömender Druckluft in guter Näherung der statische Leitungsdruck der zweiten Zuleitung 3 anliegt.

Die erste Zuleitung 2 des ersten Stoffes bzw. des Wassers mündet sowohl in die erste Bohrung 8a als auch in die zweite Bohrung 9a (in der Zeichnung nicht dargestellt).

Die Erfindung funktioniert nun wie folgt:
In einem ersten Betriebsmodus, siehe Figur 2, wird die Druckluft in einem niedrigen Druckbereich eingestellt. In diesem niedrigen Druckbereich ist für sämtliche Einstellungen die Kraft der Feder größer als die Druckkraft auf den Kolben 11, so dass der Ventilschieber 10 sich in einer ersten, oberen Endposition befindet. Hierbei schlägt der Kolben 11 an einem oberen Anschlag an.

In dieser Stellung überdeckt die obere erste Ausnehmung 12a des Schieberabschnitts 12 mit der oberen ersten Bohrung 8a, so dass das Wasser von der zweiten Zuleitung 2 durch die erste Bohrung 8a zu dem ersten Düsenglied 8 und hierdurch in die Mischkammer 4 strömen kann. Die untere Bohrung 9a ist in diesem Zustand verschlossen.

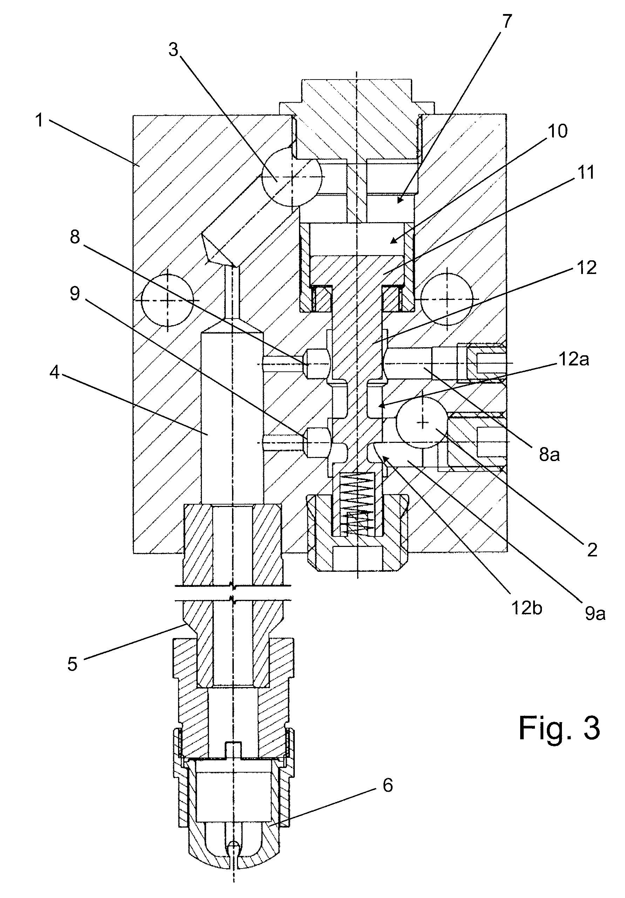

In einem zweiten Betriebsmodus, siehe Figur 3, wird die Druckluft in einem hohen Druckbereich eingestellt. In diesem hohen Druckbereich ist für sämtliche Einstellungen die Kraft der Feder kleiner als die Druckkraft auf den Kolben 11, so dass der Ventilschieber 10 sich in einer zweiten, unteren Endposition befindet. Hierbei schlägt der Kolben 11 an einem unteren Anschlag an.

In dieser Stellung überdeckt die untere zweite Ausnehmung 12b des Schieberabschnitts 12 mit der unteren zweiten Bohrung 9a, so dass das Wasser von der zweiten Zuleitung 3 durch die zweite Bohrung 9a zu dem zweiten Düsenglied 9 und hierdurch in die Mischkammer 4 strömen kann. Entsprechend Ist die obere erste Bohrung 8a in diesem Zustand verschlossen.

Insgesamt erfolgt also eine Regelung des Strömungsweges des ersten Stoffes mittels des Regelglieds 7, das vorliegend den Ventlischieber 10, die Feder 15 und die Bohrungen 8a, 9a umfasst.

Das erste Düsenglied 8 Ist im vorliegenden Beispiel kleiner ausgelegt als das zweite Düsenglied 9, so dass entsprechend dem gewählten Druckbereich der Luft eine angepasste Wassermenge in die Mischkammer 4 versprüht wird. Es Ist zu berücksichtigen, dass sowohl der Luftdruck als auch der Wasserdruck in jedem der Betriebsmodi über weite Bereiche einstellbar sind. Durch die Beströmung zweier separater (und vorliegend verschiedener) Düsenglieder je nach Betriebsmodus wird dabei der gesamte mögliche Regelbereich optimiert und vergrößert.

### Bezugszeichenliste:

- 1: Gehäuse
- 2: erste Zuleitung
- 3: zweite Zuleitung
- 3a: Querschnittsverengung
- 4: Mischkammer
- 5: Zwischenstück
- 6: Austritt
- 7: Regelglied
- 8: erstes Düsenglied
- 8a: erste Bohrung
- 8b: erster Schraubstopfen
- 9: zweites Düsenglied
- 9a: zweite Bohrung
- 9b: zweiter Schraubstopfen
- 10: Ventilschieber
- 11: Kolben
- 12: Schieberabschnitt
- 12a: erste Ausnehmung
- 12b: zweite Ausnehmung
- 13: Stopfen
- 14: Zylinder
- 15: Feder
- 16: gehäusefester Stopfen

## Patentansprüche

1. Vorrichtung zur Kühlmittelbedüsung In einer hüttentechnischen Anlage, umfassend:
zumindest eine erste Zuleitung (2) zur Zuführung eines ersten Stoffes und eine zweite Zuleitung (3) zur Zuführung eines zweiten Stoffes,
eine Mischkammer (4) zur Durchmischung der zumindest zwei Stoffe zu einem Kühlmittelgemisch, und
einen der Mischkammer (4) nachgeordneten Austritt (6) des Kühlmittelgemisches
**gekennzeichnet durch**
ein Regelglied (7), welches ausgebildet ist, den ersten Stoff in einem ersten Betriebsmodus zumindest teilweise **durch** ein erstes Düsenglied (8) In die Mischkammer (4) einströmen zu lassen und in einem zweiten Betriebsmodus zumindest teilweise **durch** ein zweites Düsenglied (9) in die Mischkammer (4) einströmen zu lassen.

2. Vorrichtung nach Anspruch 1, **dadurch gekennzeichnet, dass** das Regelglied (7) über einen Betriebsparameter des zweiten Stoffes ansteuerbar ist.

3. Vorrichtung nach Anspruch 2, **dadurch gekennzeichnet, dass** das Regelglied (7) einen Ventilschieber (10) umfasst, der durch den Betriebsparameter des zweiten Stoffes mechanisch ansteuerbar ist.

4. Vorrichtung nach Anspruch 3, **dadurch gekennzeichnet, dass** der Ventilschieber (10) einen federbelasteten Kolben (11) umfasst, der mit einem Druck des zweiten Stoffes beaufschlagt ist.

5. Vorrichtung nach Anspruch 3 oder 4, **dadurch gekennzeichnet, dass** der Ventilschieber (10) in dem ersten Betriebsmodus eine erste Bohrung (8a) zumindest teilweise freigibt und in dem zweiten Betriebsmodus eine zweite Bohrung (9a) zumindest teilweise freigibt.

6. Vorrichtung nach einem der vorhergehenden Ansprüche, **dadurch gekennzeichnet, dass** das Regelglied (7) keine elektrische Versorgung aufweist.

7. Vorrichtung nach einem der vorhergehenden Ansprüche, **dadurch gekennzeichnet, dass** das Regelglied (7), die Düsenglieder (8, 9) und die Mischkammer (4) als integrierte bauliche Einheit ausgebildet sind.

8. Verfahren zum Betrieb einer Vorrichtung zur Kühlmittelbedüsung in einer hüttentechnischen Anlage, umfassend die Schritte:
- Wahl eines Betriebsmodus durch Einstellen des Drucks eines zweiten von zwei in einer Mischkammer (4) zu mischenden Stoffen, und
- Beströmung der Mischkammer (4) mit dem ersten Stoff durch zumindest eines von zwei Düsengliedern (8, 9) in Abhängigkeit von dem gewählten Betriebsmodus.

## Claims

1. Device for spraying coolant in a metallurigical plant comprising:
at least one first feed line (2) for feeding a first substance and second feed line (3) for feeding a second substance,
a mixing chamber (4) for intimate mixing of the at least two substances to form a coolant mixture and
an outlet (6), which is downstream of the mixing chamber (4), of the cooled mixture,
**characterised by**
a regulating element (7) which is constructed to allow the first substance to flow at least partly through a first nozzle element (8) into the mixing chamber (4) in a first mode of operation and to flow at least partly through a second nozzle element (9) into the mixing chamber (4) in a second mode of operation.

2. Device according to claim 1, **characterised in that** the regulating element (7) is controllable by way of an operating parameter of the second substance.

3. Device according to claim 2, **characterised in that** the regulating element (7) comprises a valve slide (10) which is mechanically controllable by the operating parameter of the second substance.

4. Device according to claim 3, **characterised in that** the valve slide (10) comprises a spring-loaded piston (11) loaded by a pressure of the second substance.

5. Device according to claim 3 or 4, **characterised in that** the valve slide (10) in the first mode of operation at least partly frees a first bore (8a) and in the second mode of operation at least partly frees a second bore (9a).

6. Device according to any one of the preceding claims, **characterised in that** the regulating element (7) is without an electrical supply.

7. Device according to any one of the preceding claims, **characterised in that** the regulating element (7), the nozzle elements (8, 9) and the mixing chamber (4) are constructed as an integrated constructional unit.

8. Method of operating a device for spraying coolant in a metallurgical plant, comprising the steps of:
- selecting a mode of operation by setting the pressure of a second one of two substances which are to be mixed in a mixing chamber (4) and
- flow supply of the mixing chamber (4) with the first substance by at least one of two nozzle elements (8, 9) in dependence on the selected mode of operation.

## Revendications

1. Dispositif pour la pulvérisation d'un agent de refroidissement dans une installation sidérurgique, comprenant :
au moins une première conduite d'amenée (2) pour acheminer une première substance et une deuxième conduite d'amenée (3) pour acheminer une deuxième substance ;
une chambre de mélange (4) pour le mélange intime desdites au moins deux substances afin d'obtenir un agent de refroidissement sous la forme d'un mélange ; et
une sortie (6) du mélange d'agent de refroidissement montée à la suite de la chambre de mélange (4) ;
**caractérisé par**
un élément de réglage (7) qui est conçu pour laisser s'écouler la première substance dans un premier mode de fonctionnement au moins en partie à travers un premier élément faisant office de buse (8) dans la chambre de mélange (4) et pour la laisser s'écouler dans un deuxième mode de fonctionnement au moins en partie à travers un deuxième élément faisant office de buse (9) dans la chambre de mélange (4).

2. Dispositif selon la revendication 1, **caractérisé en ce que** l'élément de réglage (7) peut être excité via un paramètre de fonctionnement de la deuxième substance.

3. Dispositif selon la revendication 2, **caractérisé en ce que** l'élément de réglage (7) comprend un tiroir de soupape (10) qui peut être excité par voie mécanique via le paramètre de fonctionnement de la deuxième substance.

4. Dispositif selon la revendication 3, **caractérisé en ce que** le tiroir de soupape (10) comprend un piston (11) chargé par ressort, qui est sollicité avec une pression de la deuxième substance.

5. Dispositif selon la revendication 3 ou 4, **caractérisé en ce que** le tiroir de soupape (10), dans le premier mode de fonctionnement, libère au moins en partie un premier alésage (8a) et dans le deuxième mode de fonctionnement, libère au moins en partie un deuxième alésage (9a).

6. Dispositif selon l'une quelconque des revendications précédentes, **caractérisé en ce que** l'élément de réglage (7) ne présente aucune alimentation électrique.

7. Dispositif selon l'une quelconque des revendications précédentes, **caractérisé en ce que** l'élément de réglage (7), les éléments faisant office de buses (8, 9) et la chambre de mélange (4) sont réalisés sous la forme d'une unité de construction intégrée.

8. Procédé pour la mise en service d'un dispositif pour la pulvérisation d'un agent de refroidissement dans une installation sidérurgique, comprenant les étapes dans lesquelles :
- on sélectionne un mode de fonctionnement via le réglage de la pression d'une deuxième substance choisie parmi deux substances qui doivent être mélangées dans une chambre de mélange (4) ; et
- on inonde la chambre de mélange (4) avec la première substance via au moins un élément choisi parmi deux éléments faisant office de buses (8, 9) en fonction du mode de fonctionnement sélectionné.
